Europäisches Patentamt

European Patent Office

Office européen des brevets

(19)

(11) **EP 0 784 078 B1**

(12) **EUROPÄISCHE PATENTSCHRIFT**

(45) Veröffentlichungstag und Bekanntmachung des Hinweises auf die Patenterteilung:
**17.04.2002 Patentblatt 2002/16**

(51) Int Cl.⁷: **C08L 55/02**, C08L 25/12

(21) Anmeldenummer: **97100035.1**

(22) Anmeldetag: **03.01.1997**

(54) **Massen vom ABS-Typ für die Extrusions- und Tiefziehverarbeitung**

ABS-compositions for extrusion and deep-drawing

Compositions du type ABS pour l'extrusion et l'emboutissage profond

(84) Benannte Vertragsstaaten:
**BE DE ES FR GB IT NL**

(30) Priorität: **12.01.1996 DE 19600902**

(43) Veröffentlichungstag der Anmeldung:
**16.07.1997 Patentblatt 1997/29**

(73) Patentinhaber: **BAYER AG**
**51368 Leverkusen (DE)**

(72) Erfinder:
- **Eichenauer, Herbert, Dr.**
  **41539 Dormagen (DE)**
- **Krüger, Peter, Dr.**
  **51375 Leverkusen (DE)**
- **Staratschek, Harry**
  **51069 Köln (DE)**
- **Leitz, Edgar, Dr.**
  **41541 Dormagen (DE)**
- **Wittmann, Dieter, Dr.**
  **51375 Leverkusen (DE)**
- **Piejko, Karl-Erwin, Dr.**
  **Longmeadow, MA 01106 (US)**
- **Ramthun, Jürgen**
  **51469 Bergisch Gladbach (DE)**

(56) Entgegenhaltungen:
**GB-A- 1 036 744**

- **DATABASE WPI Section Ch, Week 7947 Derwent Publications Ltd., London, GB; Class A18, AN 79-85317b XP002057439 & JP 54 133 588 A (JAPAN SYNTHETIC RUBBER CO LTD),
17.Oktober 1979**

**Beschreibung**

Als technische Kunststoffe werden ABS-Polymerisate seit vielen Jahren zur Herstellung von Formteilen aller Art eingesetzt (siehe z.B. Ullmann's Encyclopedia of Industrial Chemistry, 5th Edition, Vol. A 21, Seiten 652-653, VCH, Weinheim, 1992), wobei insbesondere die Verarbeitung durch Spritzgießen oder Extrudieren angewandt wird.

Für die Erzeugung spezieller Teile hat sich das Tiefziehen von extrudierten Platten bewährt; dafür geeignete ABS-Materialien sind z.B. in JP 71 023 145 beschrieben.

Diese Materialien sind jedoch relativ kompliziert aufgebaut, besitzen nicht gleichzeitig ausreichende Schmelzelastizität und gute Zähigkeit bei niedrigem Kautschukgehalt und ergeben nicht tiefgezogene Teile mit guter Oberflächenqualität.

Es wurden nun ABS-Polymerisate gefunden, die sich besonders gut für die Extrusions- und Tiefziehverarbeitung bei Vermeidung der obengenannten Nachteile eignen und die als zähmachende Komponente mindestens einen besonderen Pfropfkautschuk enthalten.

Gegenstand der Erfindung sind ABS-Massen mit verbessertem Tiefziehverhalten enthaltend

A) einen oder mehrere Pfropfkautschuke von

A.1) 10 bis 60 Gew.-Teilen, vorzugsweise 20 bis 50 Gew.-Teilen, eines oder mehrerer Monomerer auf

A.2) 40 bis 90 Gew.-Teile, vorzugsweise 50 bis 80 Gew.-Teile, einer oder mehrerer Kautschukgrundlagen mit Glasübergangstemperaturen <0°C, vorzugsweise <-20°C, und

B) mindestens ein kautschukfreies thermoplastisches Harz erhalten durch radikalische Polymerisation von harzbildenden Monomeren

worin die Kautschukgrundlage A.2) mittlere Teilchendurchmesser ($d_{50}$-Werte) von 0,20 bis 0,35 μm, vorzugsweise von 0,25 bis 0,30 μm, aufweist und der Pfropfkautschuk A) durch radikalische Emulsionspfropfpolymerisation unter Verwendung eines Initiatorsystems aus organischem Hydroperoxid und einem organischen Reduktionsmittel, vorzugsweise Ascorbinsäure und/oder Ascorbinsäuresalz, hergestellt worden ist.

Besonders bevorzugte erfindungsgemäße Massen sind solche enthaltend 10 bis 60 Gew.-Teile, vorzugsweise 20 bis 50 Gew.-Teile, A und 40 bis 90 Gew.-Teile, vorzugsweise 50 bis 80 Gew.-Teile, B.

Pfropfkautschuke im Sinne der Erfindung sind die bei der Pfropfpolymerisation von Monomeren A.1) in Gegenwart von Kautschuk A.2) entstandenen Produkte.

Monomere A.1) sind vorzugsweise Gemische aus

A.1.1) 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

A.1.2) 1 bis 50 Gew.-Teilen Vinylcyanide (ungesättigte Nitrile wie Acrylnitril und Methacrylnitril) und/oder (meth) Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenylmaleinimid).

Bevorzugte Monomere A.1.1) sind Styrol, α-Methylstyrol und Methylmethacrylat, bevorzugte Monomere A. 1.2) sind Acrylnitril, Maleinsäureanhydrid, N-Phenylmaleinimid und Methylmethacrylat.

Besonders bevorzugte Monomere sind A.1.1) Styrol und A.1.2) Acrylnitril.

Für die Pfropfpolymerisate A) geeignete Kautschukgrundlagen A.2) sind beispielsweise Dienkautschuke, EPM- und EPDM-Kautschuke, also solche aus Ethylen/Propylen und gegebenenfalls kleinen Mengen eines nichtkonjugierten Diens (wie Norbonen, Norbornadien), Acrylat-, Polyurethan-, Silikon-, Chloropren- und Ethylen/Vinylacetat-Kautschuke sofern diese Kautschuke in Emulsionsform vorliegen.

Bevorzugte Kautschukgrundlagen A.2) sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß A.1.1) und A.1.2)), mit der Maßgabe, daß ihre Glasübergangstemperaturen unterhalb 0°C liegen.

Besonders bevorzugt wird reiner Polybutadienkautschuk.

Weitere besonders geeignete Kautschukgrundlagen A.2) sind Acrylatkautschuke vorzugsweise Polymerisate aus Acrylsäurealkylestern, gegebenenfalls mit bis zu 40 Gew.-% (bezogen auf A.2) anderen polymerisierbaren ethylenisch ungesättigten Monomeren. Zu den bevorzugten polymerisierbaren Acrylsäureestern gehören $C_1$-$C_8$-Alkylester, beispielsweise Methyl-, Ethyl, Butyl-, n-Octyl- und 2-Ethylhexylester; Halogenalkylester, vorzugsweise Halogen-$C_1$-$C_8$-Alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-striazin, Triallylbenzole Die Menge der vernetzenden Monomere beträgt vorzugsweise 0,02 bis 5, insbesondere 0,05 bis 2 Gew.-%, bezogen auf die Pfropfgrundlage A.2).

Bei cyclischen vernetzenden Monomeren mit mindestens 3 ethylenisch ungesättigten Gruppen ist es vorteilhaft, die Menge auf unter 1 Gew.-% der Pfropfgrundlage A.2) zu beschränken.

Bevorzugte "andere" polymerisierbare ethylenisch ungesättigte Monomere, die neben den Acrylsäureestern gegebenenfalls zur Herstellung der Pfropfgrundlage A.2) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage A.2) sind Emulsionspolymerisate, die einen Gelgehalt von mindestens 50 Gew.-% aufweisen.

Weitere geeignete Pfropfgrundlagen gemäß A.2) sind Silikonkautschuke mit pfropfaktiven Stellen, wie sie in DE-OS 3 704 657, DE-OS 3 704 655, DE-OS 3 631 540 und DE-OS 3 361 539 beschrieben werden.

Der Gelgehalt der Pfropfgrundlage A.2) beträgt 30 bis 80 Gew.-%, vorzugsweise 40 bis 70 Gew.-% und besonders bevorzugt 45 bis 60 Gew.-% (gemessen nach der Drahtkäfigmethode in Toluol, vgl. Houben-Weyl, Methoden der Organischen Chemie, Makromolekulare Stoffe, Teil 1, S. 307 (1961), Thieme Verlag Stuttgart, der mittlere Teilchendurchmesser $d_{50}$ der Kautschukgrundlage A.2) beträgt 0,20 bis 0,35 $\mu$m, vorzugsweise 0,25 bis 0,30 $\mu$m.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid Z. u. Z. Polymere 250 (1972), S. 782 bis 796) bestimmt werden.

Die Pfropfkautschuke A werden durch radikalische Emulsionspolymerisation hergestellt.

Bei der Herstellung der Pfropfkautschuke A können die üblicherweise als Molekulargewichtsregler eingesetzten Verbindungen wie z.B. Mercaptane oder dimeres $\alpha$-Methylstyrol verwendet werden.

Als Emulgatoren sind praktisch alle Emulgatortypen (anionische, kationische und nichtionische Emulgatoren) geeignet, bevorzugt werden anionische Emulgatoren eingesetzt.

Geeignete anionische Emulgatoren sind beispielsweise Natrium-, Kalium- oder Ammoniumsalze langkettiger Fettsäuren mit 10 bis 20 Kohlenstoffatomen, z.B. Kaliumoleat, Salze der disproportionierten Abietinsäure, Salze langkettiger Benzolsulfonate, Salze langkettiger Sulfonsäuren, z.B. die Natriumsalze von $C_9$-$C_{18}$-Alkylsulfonsäure-Gemischen und Salze von Dicarbonsäuren auf Basis cyclischer Kohlenwasserstoffgerüste gemäß DE-OS 3 639 904 und DE-OS 3 913 509.

Als Reaktionstemperaturen können beliebig solche Temperaturen gewählt werden, bei denen die eingesetzten Initiatorverbindungen in ausreichendem Maße Radikale zurAuslösung und Aufrechterhaltung der Polymerisationsreaktion liefern. Dieser Temperaturbereich liegt etwa zwischen 30°C und 120°C, vorzugsweise zwischen 45°C und 100°C und besonders bevorzugt zwischen 50°C und 70°C.

Besonders geeignete Pfropfkautschuke sind ABS-Polymerisate, die durch Redox-Initiierung mit einem Initiatorsystem aus organischem Hydroperoxid und einem organischen Reduktionsmittel hergestellt werden.

Beispiele für organische Peroxide sind Di-tert.-butylperoxid, Cumolhydroperoxid, Dicyclohexylpercarbonat, tert-Butylhydroperoxid, p-Menthanhydroperoxid, bevorzugt sind Cumolhydroperoxid und tert.-Butylhydroperoxid. Beispiele für organische Reduktionsmittel sind z.B. Zuckerderivate wie z.B. Glukose, Dextrose, Ascorbinsäure bzw. deren Salze, bevorzugtes organisches Reduktionsmittel ist Ascorbinsäure und/oder Ascorbinsäuresalz.

Ein weiterer Gegenstand der Erfindung ist die Verwendung von Pfropfkautschuken A, erhalten durch Redoxinitiierte Emulsionspolymerisation unter Verwendung eines organischen Hydroperoxids, vorzugsweise Cumolhydroperoxid oder tert.-Butylhydroperoxid, und eines organischen Reduktionsmittels, vorzugsweise Ascorbinsäure und/oder Ascorbinsäuresalz, und unter Einsatz einer Kautschukgrundlage, vorzugsweise Polybutadien, mit einem mittleren Teilchendurchmesser ($d_{50}$-Wert) von 0,20 bis 0,35 $\mu$m, vorzugsweise 0,25 bis 0,30 $\mu$m, und einem Gelgehalt von 30 bis 80 Gew.-%, vorzugsweise 40 bis 70 Gew.-% und besonders bevorzugt 45 bis 60 Gew.-%, zur Herstellung von Massen vom ABS-Typ für die Extrusions- und Tiefziehverarbeitung.

Die erfindungsgemäßen Formmassen enthalten 10 bis 60 Gew.-Teile A und 40 bis 90 Gew.-Teile B, bevorzugt 20 bis 50 Gew.-Teile A und 50 bis 80 Gew.-Teile B.

Mit weniger als 10 Gew.-Teilen A ist die Schlagzähmodifizierung der Massen nicht mehr ausreichend, während mit mehr als 60 Gew.-Teilen A die Steifigkeit der Massen verloren geht.

Das kautschukfreie thermoplastische Harz B umfaßt ein oder mehrere durch radikalische Polymerisation von harzbildenden Monomeren erhaltene Polymerisate.

Geeignet sind insbesondere Polymerisate B) von einem oder mehreren Monomeren aus der Gruppe der Vinylaromaten, Vinylcyanide (ungesättigte Nitrile), Acrylsäure-($C_1$-$C_8$)-alkylester, Methacrylsäure-($C_1$-$C_8$)-alkylester, ungesättigten Carbonsäuren einschließlich deren Derivaten (wie Anhydride und Imide). Insbesondere geeignet sind Copolymerisate aus

B.1) 50 bis 99 Gew.-Teilen Vinylaromaten und/oder kernsubstituierten Vinylaromaten (beispielsweise Styrol, $\alpha$-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

B.2) 1 bis 50 Gew.-Teilen Vinylcyanide (ungesättigte Nitrile wie Acrylnitril und Methacrylnitril) und/oder (Meth) Acrylsäure-($C_1$-$C_8$)-alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenylmaleinimid).

Die Polymerisate B) sind harzartig, thermoplastisch und kautschukfrei.

Besonders bevorzugt ist das Copolymerisat aus B.1) Styrol und B.2) Acrylnitril.

Die Polymerisate B) sind bekannt und lassen sich durch radikalische Polymerisation, insbesondere durch Emulsions-, Suspensions-, Lösungs- oder Massepolymerisation herstellen. Die Polymerisate B besitzen vorzugsweise mittlere Molekulargewichte $\overline{M}_w$ (Gewichtsmittel, ermittelt durch Lichtstreuung oder Sedimentation) von 15 000 bis 300 000, vorzugsweise von 40 000 bis 250 000 und besonders bevorzugt von 50 000 bis 200 000.

Das Gewichtsverhältnis A:B ist 2:1 bis 1:4 (vorzugsweise 1:1 bis 1:2). Höhere Verhältnisse A:B führen zu nicht ausreichendem Fließverhalten und verringerter Steifigkeit, während niedrigere Verhältnisse A:B eine unbefriedigende Kältezähigkeit bewirken.

Die erfindungsgemäßen Massen können weitere bekannte Zusätze in den üblichen bzw. notwendigen Mengen enthalten. Ohne Anspruch auf Vollständigkeit seien hier genannt Stabilisatoren (z.B. sterisch gehinderte Phenole und Thioether oder Phosphitverbindungen als Synergisten), übliche Pigmente (Ruß, Metalloxide etc.), Entformungsmittel (z.B. Pentaerythrittetrastearat), Fließhilfsmittel (Ethylendiaminbisstearylamid), Füll- und Verstärkungsstoffe (z. B. Glas- und Kohlefasern), Flammschutzmittel (z.B. Tetrabrombisphenol A), Antitropfmittel (z.B. Tetrafluorethylenpolymerisate) und Antistatika (z.B. Polyalkylenether).

Die erfindungsgemäßen Massen können hergestellt werden, indem man die Bestandteile in üblicher Weise vermischt und bei erhöhten Temperaturen, vorzugsweise bei 200 bis 260°C, in üblichen Vorrichtungen wie Innenknetern, Extrudern oder Doppelwellenschnecken schmelzcompoundiert oder schmelzextrudiert. Die erfindungsgemäßen Massen eignen sich besonders zur Herstellung von Formteilen durch Extrudieren (z.B. Platten und Folien) und anschließendes Tiefziehen.

Ein weiterer Gegenstand der Erfindung ist die Verwendung der beschriebenen Massen zur Herstellung von Formkörpern durch Extrusion und durch Tiefziehen.

**Beispiele**

**1. Bestandteile**

A.I. Pfropfkautschuk hergestellt durch Emulsionspolymerisation eines Gemisches aus 40 Gew.-Teilen eines Styrol/Acrylnitril-Gemisches (Gew.-Verhältnis 73:27) in Gegenwart von 60 Gew.-Teilen (Feststoff) eines nach üblichem Verfahren hergestellten Polybutadienlatex (mittlerer Teilchendurchmesser $d_{50}$ = 280 nm, Gelgehalt = 45 Gew.-%) mit einem Redox-Initiatorsystem aus Cumolhydroperoxid und Ascorbinsäure (Herstellung analog zu Beispiel B.1 der DE-OS 3 738 143).

A.II. (Vergleich)
Pfropfkautschuk hergestellt durch Emulsionspolymerisation eines Gemisches aus 40 Gew.-Teilen eines Styrol/Acrylnitril-Gemisches (Gew.-Verhältnis 73:27) in Gegenwart von 60 Gew.-Teilen (Feststoff) eines nach üblichem Verfahren hergestellten Polybutadienlatex (mittlerer Teilchendurchmesser $d_{50}$ = 280 nm, Gelgehalt = 45 Gew.-%)

mit Kaliumpersulfat als Initiator.

A.III. (Vergleich)
Pfropfkautschuk hergestellt analog A.II unter Verwendung eines Polybutadienlatex mit einem mittleren Teilchendurchmesser $d_{50}$ = 408 nm.

A.IV. (Vergleich)
Pfropfkautschuk hergestellt analog A.I unter Verwendung eines Polybutadienlatex mit einem mittleren Teilchendurchmesser $d_{50}$ = 408 nm.

A.V. (Vergleich)
Pfropfkautschuk hergestellt analog A.I unter Verwendung eines Polybutadienlatex mit einem mittleren Teilchendurchmesser $d_{50}$ = 283 nm und einem Gelgehalt = 91 %.

A.VI. (Vergleich)
Pfropfkautschuk hergestellt analog A.II unter Verwendung eines Polybutadienlatex mit einem mittleren Teilchendurchmesser $d_{50}$ = 128 nm.

A.VII. (Vergleich)
Pfropfkautschuk hergestellt analog A.I unter Verwendung eines Polybutadienlatex mit einem mittleren Teilchendurchmesser $d_{50}$ = 128 nm.

B. Styrol/Acrylnitril-Copolymerisat mit einem Styrol/Acrylnitril-Gewichtsverhältnis von 72:28, einem mittleren Molekulargewicht $\overline{M}_w$ = 115 000 und einer molekularen Uneinheitlichkeit U = $\overline{M}_w/\overline{M}_n$ -1≤2.

## 2. Herstellung und Prüfung der erfindungsgemäßen Massen und der Vergleichsmassen

A und B wurden in den in Tabelle 1 angegebenen Mengen zusammen mit Additiven (2 Gew.-Teile Pentaerythrittetrastearat und 0,1 Gew.-Teile Silikonöl, jeweils pro 100 Gew.-Teile A + B) in einem Innenkneter bei 180 bis 230°C aufgeschmolzen, homogenisiert und granuliert. Aus den Granulaten wurden Platten hergestellt.
Da für eine gute Tiefziehfähigkeit von ABS-Massen eine hohe Schmelzeelastizität (entsprechend einem niedrigen Verlustfaktor tan δ) notwendig ist, kann das Tiefziehverhalten durch Bestimmung des Verlustfaktors tan δ bei niedrigen Frequenzen (entsprechend einer beim Tiefziehen auftretenden niedrigen Schergeschwindigkeit) bei einer Temperatur von 170°C ermittelt werden (Gerät: RDA II der Firma Rheometrics, Platte/Platte-Anordnung).
Von einigen Produkten wurden zusätzlich extrudierte Platten (30 cm x 26 cm) zu einem Paraboloid tiefgezogen, wobei die Tiefziehfähigkeit und die Beschaffenheit der Oberfläche beurteilt wurde.
Die Mechanik wurde durch das Verhalten bei Schlageinwirkung beurteilt.
Wie aus Tabelle 2 ersichtlich weisen nur die erfindungsgemäßen Massen bei niedrigen Frequenzen (ω = 0,02 rad/sec) einen für eine gute Tiefziehfähigkeit benötigten niedrigen Verlustfaktor tan δ auf. Besonders bemerkenswert ist die gute Tiefziehfähigkeit der erfindungsgemäßen Massen mit niedrigem Kautschukgehalt (Beispiel 1, tan δ = 1,6); eine so gute Tiefziehbarkeit wird sonst näherungsweise erst bei viel höheren Kautschukgehalten (siehe z.B. Beispiele 12 und 13, tan δ = 1,3 bzw. 1,9) unter Inkaufnahme von deutlichen Nachteilen (z.B. schlechter Oberfläche) erreicht.
Die Tiefziehbarkeit und die Oberfläche der tiefgezogenen Teile wurden wie folgt bewertet:
++ sehr gut
+ gut
o mittel
- schlecht
-- sehr schlecht

Tabelle 1

| Zusammensetzungen der Massen | | | | | | | | |
|---|---|---|---|---|---|---|---|---|
| Beispiel | A.I [Gew. -Teile] | A.II [Gew. -Teile] | A.III [Gew. -Teile] | A.IV [Gew. -Teile] | A.V [Gew. -Teile] | A.VI [Gew. -Teile] | A.VII [Gew. -Teile] | B [Gew. -Teile] |
| 1 | 25 | - | - | - | - | - | - | 75 |

Tabelle 1   (fortgesetzt)

| Zusammensetzungen der Massen | | | | | | | | |
|---|---|---|---|---|---|---|---|---|
| Beispiel | A.I [Gew.-Teile] | A.II [Gew.-Teile] | A.III [Gew.-Teile] | A.IV [Gew.-Teile] | A.V [Gew.-Teile] | A.VI [Gew.-Teile] | A.VII [Gew.-Teile] | B [Gew.-Teile] |
| 2 (Vergleich) | - | 25 | - | - | - | - | - | 75 |
| 3 (Vergleich) | - | - | 25 | - | - | - | - | 75 |
| 4 | 33,3 | - | - | - | - | - | - | 66,7 |
| 5 (Vergleich) | - | 33,3 | - | - | - | - | - | 66,7 |
| 6 (Vergleich) | - | - | 33,3 | - | - | - | - | 66,7 |
| 7 (Vergleich) | - | - | - | 33,3 | - | - | - | 66,7 |
| 8 (Vergleich) | - | - | - | - | 33,3 | - | - | 66,7 |
| 9 (Vergleich) | - | - | - | - | - | 33,3 | - | 66,7 |
| 10 (Vergleich) | - | - | - | - | - | - | 33,3 | 66,7 |
| 11 | 41,7 | - | - | - | - | - | - | 58,3 |
| 12 (Vergleich) | - | 41,7 | - | - | - | - | - | 58,3 |
| 13 (Vergleich) | - | | 41,7 | - | - | - | - | 58,3 |

Tabelle 2

| Beurteilung der Massen | | | | |
|---|---|---|---|---|
| Beispiel | tan δ bei ω = 0,02 rad/sec | Verhalten beim Tiefziehen | Oberflächenqualität des tiefgezoenen Teils | Verhalten bei Schlageinwirkung |
| 1 | 1,6 | ++ | ++ | zäh |
| 2 (Vergleich) | 2,4 | o | -- | zäh |
| 3 (Vergleich) | 2,8 | - | n.g. | zäh |
| 4 | 1,2 | ++ | ++ | zäh |
| 5 (Vergleich) | 2,0 | o | - | zäh |
| 6 (Vergleich) | 2,5 | - | n.g. | zäh |
| 7 (Vergleich) | 1,5 | o | - | zäh |
| 8 (Vergleich) | 2,4 | - | n.g. | spröde |
| 9 (Vergleich) | 2,0 | - | n.g. | spröde |
| 10 (Vergleich) | 1,3 | - | n.g. | spröde |
| 11 | 0,9 | ++ | + | zäh |

Tabelle 2   (fortgesetzt)

| Beurteilung der Massen | | | | |
|---|---|---|---|---|
| Beispiel | tan δ bei ω = 0,02 rad/sec | Verhalten beim Tiefziehen | Oberflächenqualität des tiefgezoenen Teils | Verhalten bei Schlageinwirkung |
| 12 (Vergleich) | 1,3 | ++ | o | zäh |
| 13 (Vergleich) | 1,9 | + | - | zäh |
| n.g. = nicht gemessen | | | | |

**Patentansprüche**

1.  Massen vom ABS-Typ enthaltend

    A) einen oder mehrere Pfropfkautschuke von

        A.1) 10 bis 60 Gew.-Teilen eines oder mehrerer Monomerer auf

        A.2) 40 bis 90 Gew.-Teile einer oder mehrerer Kautschukgrundlagen mit Glasübergangstemperaturen <0°C und einem Gelgehalt von 30 bis 80 Gew.-%

    und

    B) mindestens ein kautschukfreies thermoplastisches Harz erhalten durch radikalische Polymerisation von harzbildenden Monomeren

    worin die Kautschukgrundlage A.2) mittlere Teilchendurchmesser ($d_{50}$-Werte) von 0,20 bis 0,35 µm aufweist und der Pfropfkautschuk A) durch radikalische Emulsionspfropfpolymerisation unter Verwendung eines Initiatorsystems aus organischem Hydroperoxid und einem organischen Reduktionsmittel hergestellt worden ist.

2.  Massen gemäß Anspruch 1 enthaltend 20 bis 50 Gew.-Teile A.1, 50 bis 80 Gew.-Teile A.2, wobei A.2) mittlere Teilchendurchmesser ($d_{50}$-Werte) von 0,25 bis 0,30 µm aufweist.

3.  Massen gemäß Anspruch 1, enthaltend 10 bis 60 Gew.-Teile A) und 40 bis 90 Gew.-Teile B.

4.  Massen gemäß Anspruch 1, worin der Gelgehalt der Kautschukgrundlage A.2) 45 bis 60 Gew.-% beträgt.

5.  Massen gemäß Anspruch 1, worin A.1 ein Gemisch aus Styrol und Acrylnitril ist.

6.  Massen gemäß Anspruch 1, worin A.2) Polybutadien ist.

7.  Massen gemäß Anspruch 1, worin B) ein Copolymerisat aus Styrol und Acrylnitril ist.

8.  Verwendung der Massen gemäß Anspruch 1 zur Herstellung tiefgezogener Formteile aus extrudierten Platten.

9.  Verwendung der Pfropfkautschuke A gemäß Anspruch 1 zur Herstellung von Massen für die Extrusions- und Tiefziehverarbeitung.

10. Durch Tiefziehen erhaltene Formkörper aus den Massen gemäß Anspruch 1.

**Claims**

1.  Compositions of the ABS type containing

    A) one or more graft rubbers of

A.1) from 10 to 60 parts by weight of one or more monomers on

A.2) from 40 to 90 parts by weight of one or more rubber backbones having glass transition temperatures <0°C and a gel content of from 30 to 80 wt.%

and

B) at least one rubber-free thermoplastic resin obtained by radical polymerisation of resin-forming monomers,

wherein the rubber backbone A.2) has average particle diameters ($d_{50}$ values) of from 0.20 to 0.35 μm and the graft rubber A) has been produced by radical emulsion graft polymerisation with the use of an initiator system comprising organic hydroperoxide and an organic reducing agent.

2. Compositions according to claim 1, containing from 20 to 50 parts by weight of A.1), from 50 to 80 parts by weight of A.2), with A.2) having average particle diameters ($d_{50}$ values) of from 0.25 to 30 μm.

3. Compositions according to claim 1, containing from 10 to 60 parts by weight of A) and from 40 to 90 parts by weight of B).

4. Compositions according to claim 1, wherein the gel content of the rubber backbone A.2) is from 45 to 60 wt.%.

5. Compositions according to claim 1, wherein A.1) is a mixture of styrene and acrylonitrile.

6. Compositions according to claim 1, wherein A.2) is polybutadiene.

7. Compositions according to claim 1, wherein B) is a copolymer of styrene and acrylonitrile.

8. Use of the compositions according to claim 1 for the production of deep-drawn moulded parts from extruded sheets.

9. Use of the graft rubbers A) according to claim 1 for the production of compositions for processing by extrusion and deep drawing.

10. Mouldings obtained from the compositions according to claim 1 by means of deep drawing.

**Revendications**

1. Compositions de type ABS contenant :

A) un ou plusieurs caoutchoucs greffés de :

A.1) 10 à 60 parties en poids d'un ou plusieurs monomères sur
A.2) 40 à 90 parties en poids d'une ou plusieurs bases caoutchouc avec une température de transition vitreuse < 0°C, et une teneur en gel allant de 30 à 80% en poids, et

B) au moins une résine thermoplastique exempte de caoutchouc, obtenue par polymérisation radicalaire de monomères formant résine,

où la base caoutchouc A2) présente un diamètre moyen des particules (valeur $d_{50}$) allant de 0,20 à 0,35 μm, et la caoutchouc greffé A) est préparé par polymérisation radicalaire par greffage en émulsion en utilisant un système initiateur composé d'hydroperoxyde organique et d'un agent de réduction organique.

2. Compositions suivant la revendication 1, contenant 20 à 50 parties en poids de A.1, 50 à 80 parties en poids de A.2, où A.2 présente un diamètre moyen des particules (valeur $d_{50}$) allant de 0,25 à 0,30 μm.

3. Compositions suivant la revendication 1, contenant 10 à 60 parties en poids de A et 40 à 90 parties en poids de B.

4. Compositions suivant la revendication 1, où la teneur en gel de la base caoutchouc A.2 se situe dans l'intervalle allant de 45 à 60% en poids.

5. Compositions suivant la revendication 1, où A.1 est un mélange de styrène et d'acrylonitrile.

6. Compositions suivant la revendication 1, où A.2 est un polybutadiène.

7. Compositions suivant la revendication 1, où B est un copolymère de styrène et d'acrylonitrile.

8. Utilisation des compositions suivant la revendication 1, pour préparer des pièces moulées embouties en profondeur à partir de plaques extrudées.

9. Utilisation du caoutchouc greffé A suivant la revendication 1, pour préparer des compositions pour extrusion et emboutissage profond.

10. Corps moulé obtenu par emboutissage profond à partir des compositions suivant la revendication 1.